# EUROPEAN PATENT APPLICATION

(11) **EP 3 846 162 A1**
(43) Date of publication of application: **07.07.2021**
(21) Application number: 20216951.2
(22) Date of filing: 23.12.2020
(51) Int. Cl.: G10L 15/22, G06F 3/16, G10L 15/28, G10L 21/0208, H04M 3/00, G10L 15/08

(54) **SMART AUDIO DEVICE, CALLING METHOD FOR AUDIO DEVICE, ELECTRONIC DEVICE AND COMPUTER READABLE MEDIUM**

(30) Priority: 03.01.2020 CN 202010007936
(71) Applicant: BAIDU ONLINE NETWORK TECHNOLOGY (BEIJING) CO., LTD., Beijing 100085 (CN)
(72) Inventor: Geng, Lei, Beijing, 100085 (CN)
(74) Representative: Canzler & Bergmeier Patentanwälte Partnerschaft mbB

(57) **Abstract**

The present disclosure provides a smart audio device, including a front chip (10) provided therein with a plurality of voice algorithm modules; and a main control chip (20) signally connected with the front chip and configured to call the voice algorithm modules in the front chip according to a user request in a multi-thread mode. The smart audio device is low in cost and power consumption, has long service life, and can improve user experience. The present disclosure further provides a calling method for audio device, an electronic device and a computer readable medium.

## Description

### TECHNICAL FIELD

The embodiments of the present disclosure relate to the field of computer technology, and in particular, to a smart audio device, a calling method for audio device, an electronic device, and a computer readable medium.

### BACKGROUND

With the development of voice recognition technology, more and more intelligent hardware devices have a voice interaction function, and the quality of voice interaction is closely related to a noise reduction process of front-end audio signals. In general, there are two noise reduction methods: one achieves noise reduction with a front-end audio digital signal processing chip, such as a digital signal processor (DSP) or an application specific integrated circuit (ASIC), and the other one achieves the noise reduction with a software on a main control chip. However, both of the two noise reduction methods have defects to varying degrees.

### SUMMARY

Embodiments of the present disclosure provide a smart audio device, a calling method for audio device, an electronic device and a computer readable medium.

In a first aspect, an embodiment of the present disclosure provides a smart audio device, including: a front chip provided therein with a plurality of voice algorithm modules; and a main control chip signally connected with the front chip and configured to call the voice algorithm modules in the front chip according to a user request in a multi-thread mode.

In some embodiments, the voice algorithm modules include: a voice wake-up algorithm module configured to wake up the main control chip according to the user request; and a front-end signal processing module configured to perform a noise reduction process on a front-end signal.

In some embodiments, the front-end signal processing module includes: a voice recognition front-end signal processing module configured to perform the noise reduction process on a front-end voice signal and obtain a voice recognition engine signal; and a communication front-end signal processing module configured to perform the noise reduction process on a front-end communication signal and obtain a communication application signal.

In some embodiments, the main control chip includes: a voice recognition module configured to recognize a voice signal; and/or a communication application module configured to communicate with other communication modules.

In some embodiments, the smart audio device further includes a communication interface configured to transmit signals between the front chip and the main control chip.

In some embodiments, the communication interface includes at least one of a general-purpose I/O interface, an Inter-Integrated Circuit bus interface, and a Serial Peripheral Interface.

In some embodiments, the smart audio device further includes a microphone signally connected with the front chip and configured to receive voice information and transmit the voice information to the front chip.

In some embodiments, the front chip further includes an echo cancellation module signally connected with the voice algorithm modules and configured to perform an echo cancellation process on the received voice information.

In a second aspect, an embodiment of the present disclosure provides a calling method for audio device, including: calling different voice algorithms in a front chip according to a user request in a multi-thread mode.

In some embodiments, the step of calling the different voice algorithms in the front chip according to the user request in the multi-thread mode includes: receiving a wake-up request, which is the user request; entering a working mode in response to the wake-up request; and sending an instruction of calling a voice recognition front-end signal processing algorithm in the front chip, so as to switch the front chip to a voice recognition front-end signal processing algorithm mode.

In some embodiments, after the step of sending the instruction of calling the voice recognition front-end signal processing algorithm, the calling method further includes: receiving a communication request, which is the user request; and sending an instruction of calling a communication front-end signal processing algorithm in the front chip in response to the communication request.

In some embodiments, after the communication is finished, the calling method further includes: sending an instruction of calling the voice recognition front-end signal processing algorithm in the front chip, so as to switch the front chip to the voice recognition front-end signal processing algorithm mode.

In some embodiments, in response to no voice interaction, sending an instruction of calling a voice wake-up algorithm in the front chip, so as to switch the front chip to a voice wake-up algorithm mode.

In a third aspect, an embodiment of the present disclosure provides an electronic device, including: one or more processors; a memory having one or more programs stored thereon, when the one or more programs are executed by the one or more processors, the one or more processors perform the above calling method for audio device; and one or more I/O interfaces connected between the processor and the memory and configured to enable information interaction between the processor and the memory.

In a fourth aspect, an embodiment of the present disclosure provides a computer readable medium having a computer program stored thereon. When the computer program is executed by a processor, the above calling method for audio device is performed.

In the smart audio device provided by the embodiments of the present disclosure, the plurality of voice algorithm modules are arranged in the front chip, and the main control chip calls the voice algorithm modules in the front chip according to the user request in the multi-thread mode, so that a voice wake-up algorithm can be arranged in the front chip, and even a main control chip having low computation and low cost can meet application requirements, thereby reducing a cost of main control chip, and further reducing a total cost of the smart audio device; moreover, the main control chip can adjust an operation frequency thereof as required, so that the power consumption of the main control chip can be reduced and the service life of the main control chip can be prolonged. In addition, by calling the voice algorithm modules in the front chip in the multi-thread mode, a flexibility of the smart audio device is enhanced, and different user's needs are met, thereby improving user experience.

### BRIEF DESCRIPTION OF THE DRAWINGS

The accompanying drawings are intended to provide further understanding of the embodiments of the present disclosure, and are incorporated in and constitute a part of the Specification. The drawings, together with the embodiments of the present disclosure, are intended to explain the present disclosure, rather than limiting the present disclosure. With the detailed description of exemplary embodiments with reference to the drawings, the above and other features and advantages will become more apparent to those skilled in the art. In the drawings:
Fig. 1 is a schematic structural diagram of a smart audio device according to an embodiment of the present disclosure;
Fig. 2 is a schematic structural diagram of a smart audio device according to an embodiment of the present disclosure;
Fig. 3 is a flowchart illustrating a calling method for audio device according to an embodiment of the present disclosure;
Fig. 4 is a flowchart illustrating a calling method for audio device according to an embodiment of the present disclosure; and
Fig. 5 is a block diagram of an electronic device according to an embodiment of the present disclosure.

### DETAILED DESCRIPTION

In order to enable those skilled in the art to better understand the technical solutions of the present disclosure, a smart audio device, a calling method for audio device, an electronic device and a computer readable medium provided by the present disclosure are described in detail below with reference to the accompanying drawings.

Although exemplary embodiments will be described in more detail below with reference to the drawings, the exemplary embodiments can be embodied in various forms and should not be interpreted as limitation to the present disclosure. Rather, these embodiments are provided for facilitating thorough and complete understanding of the present disclosure, and enabling those skilled in the art to fully understand the scope of the present disclosure.

The embodiments and the features thereof in the present disclosure may be combined with one another if no conflict is incurred.

As used herein, the term "and/or" includes any and all combinations of one or more of the associated listed items.

The terms used herein are intended to describe specific embodiments, rather than limiting the present disclosure. Unless expressly indicated otherwise, the singular terms "a", "an" and "the" used herein are intended to include plural forms as well. It should also be understood that the terms "include" and/or "comprise", when used herein, specify the presence of the stated features, integers, steps, operations, elements, and/or components, but do not preclude the presence or addition of one or more other features, integers, steps, operations, elements, components, and/or the groups thereof.

Unless defined otherwise, all the terms (including technical and scientific terms) used herein have the same meaning as commonly understood by those skilled in the art. Unless expressly defined herein, the terms defined in generally used dictionaries should be interpreted as having the meanings given in the context of the related art and the present disclosure, and should not be interpreted as having idealized or overly formal meanings.

The embodiments of the present disclosure are provided in view of that a single-thread working mode of an audio front chip is accepted, that is, the audio front chip works in a single mode after being powered on, and cannot adjust the working mode to optimize the working frequency according to actual applications (such as voice recognition, communication application, and voice wake-up) of a back end, which causes high overall power consumption of an intelligent hardware device. In addition, due to the single-thread working mode, a voice wake-up algorithm cannot be adjusted according to the communication application of the back end, resulting in poor user experience.

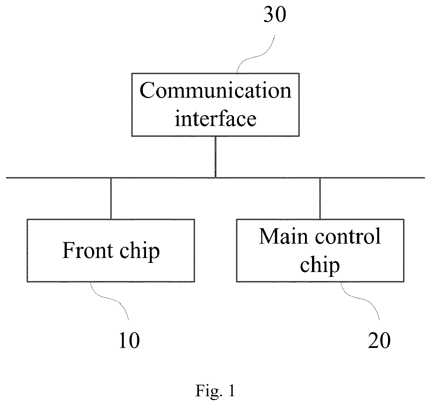

In a first aspect, an embodiment of the present disclosure provides a smart audio device. Fig. 1 is a schematic structural diagram of a smart audio device according to an embodiment of the present disclosure. With reference to Fig. 1, the smart audio device includes: a front chip 10 provided therein with a plurality of voice algorithm modules, each corresponding to one voice algorithm mode; and a main control chip 20 signally connected with the front chip 10 and configured to call the voice algorithm modules in the front chip according to a user request in a multi-thread mode.

The user request includes, but is not limited to, a voice wake-up request, a voice recognition request, and a communication request.

In some embodiments, the front chip 10 and the main control chip 20 are signally connected through a communication interface 30, which includes, but is not limited to, at least one of a general-purpose I/O interface, an Inter-Integrated Circuit (I2C) bus interface, and a Serial Peripheral Interface (SPI). In some embodiments, with the aid of the communication interface 30, the front chip 10 and the main control chip 20 can achieve transmission of control signals, reset signals, wake-up terminal signals, and the audio signals processed by algorithms.

In some embodiments, after the smart audio device is powered on, the front chip 10 is in a voice wake-up mode, and the main control chip 20 is in a standby mode.

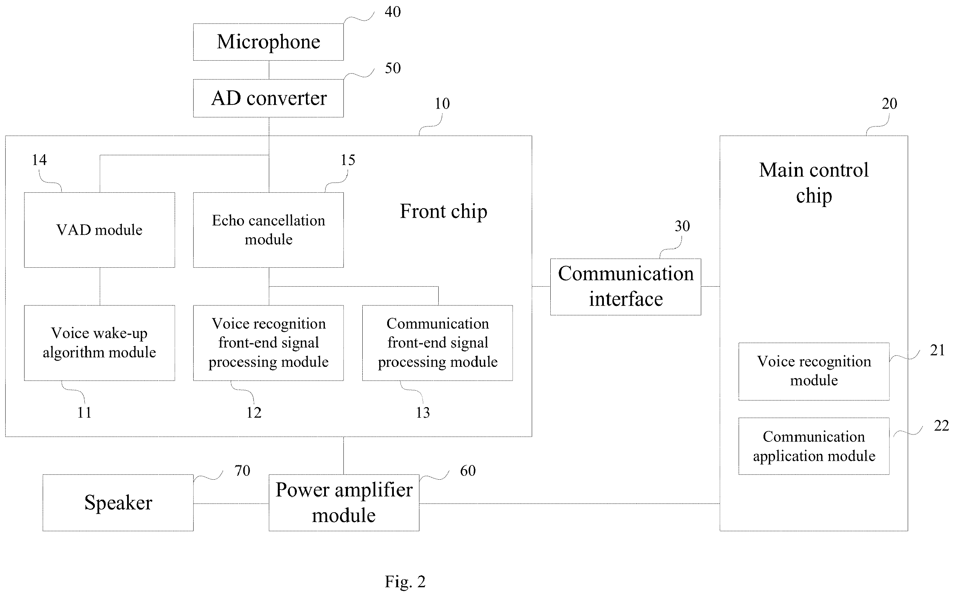

Fig. 2 is a schematic structural diagram of a smart audio device according to an embodiment of the present disclosure. As shown in Fig. 2, the voice algorithm modules arranged in the front chip 10 include a voice wake-up algorithm module 11, a voice recognition front-end signal processing module 12, and a communication front-end signal processing module 13. The voice wake-up algorithm module 11 is configured to wake up the main control chip 20 according to a user request. For example, when the main control chip 20 is in the standby mode, the voice wake-up algorithm module 11 wakes up the main control chip 20 according to a wake-up request from a user to put the main control chip 20 into a working mode. The voice recognition front-end signal processing module 12 is configured to perform a noise reduction process on a front-end voice signal and obtain a voice recognition engine signal. The communication front-end signal processing module 13 is configured to perform the noise reduction process on a front-end communication signal and obtain a communication application signal.

The front-end signal processing modules 12 and 13 are configured to perform the noise reduction process on a front-end signal, which is a signal received by the front chip 10. In some embodiments, the front-end signal may be the front-end voice signal, the front-end communication signal, etc. The front-end signal processing modules 12 and 13 perform the noise reduction process on the front-end signal, and then transmits the processed front-end signal to the main control chip 20 via a communication interface.

The main control chip 20 includes a voice recognition module 21 configured to recognize a voice signal, and a communication application module 22. The voice recognition module 21 is turned on in response to the voice recognition engine signal and recognizes an input voice signal. For example, the voice recognition module 21 may recognize a letter, a word, a short sentence or a long sentence to determine the user request. The communication application module 22 is configured to communicate with other communication modules. The communication application module 22 is turned on in response to the communication application signal and communicates with the other communication modules, which may be other smart audio devices, and modules having a communication function, such as a smart phone, IPAD and so on.

It should be noted that, when the processing capabilities of the main control chip 20 cannot meet user's needs, the main control chip 20 may send the voice signal to a cloud server having a stronger computing capability to let the cloud server to recognize the voice signal.

The smart audio device further includes a microphone 40 signally connected with the front chip 10 and configured to receive voice information and transmit the voice information to the front chip 10. In some embodiments, the microphone 40 is implemented in a form of a microphone array, that is, a plurality of microphones are connected to the front chip 10. In some embodiments, an analog-to-digital (AD) converter 50 is disposed between the microphone 40 and the front chip 10 to convert an analog signal received by the microphone 40 into a digital signal.

In some embodiments, the front chip 10 further includes a Voice Activity Detection (VAD) module 14 and an echo cancellation module 15. The VAD module 14 is signally connected between the AD converter 50 and the voice wake-up algorithm module 11, and is configured to recognize and eliminate a long silent period from an audio signal flow. The echo cancellation module 15 is signally connected between the AD converter 50 and the front-end signal processing modules, and is configured to perform an echo cancellation process on the received voice information.

In some embodiments, the smart audio device further includes a power amplifier module 60 and a speaker 70. The power amplifier module 60 is signally connected with the main control chip 20, and is configured to amplify a voice signal output by the main control chip 20 and input the amplified voice signal into the speaker 70. The speaker 70 is configured to play the amplified voice signal.

In some embodiments, the front chip 10 collects the voice signal from the power amplifier module 60, and takes the voice signal as a reference signal for echo cancellation.

In the smart audio device provided by the embodiments of the present disclosure, the plurality of voice algorithm modules are arranged in the front chip, and the main control chip calls the voice algorithm modules in the front chip according to the user request in the multi-thread mode, so that a voice wake-up algorithm can be arranged in the front chip, and even a main control chip having low computation and low cost can meet application requirements, thereby reducing a cost of main control chip, and further reducing a total cost of the smart audio device; moreover, the main control chip can adjust an operation frequency thereof as required, so that the power consumption of the main control chip can be reduced and the service life of the main control chip can be prolonged. In addition, by calling the voice algorithm modules in the front chip in the multi-thread mode, a flexibility of the smart audio device is enhanced, and different user's needs are met, thereby improving user experience.

In a second aspect, an embodiment of the present disclosure provides a calling method for audio device, which calls a voice algorithm module in a front chip according to a user request in a multi-thread mode.

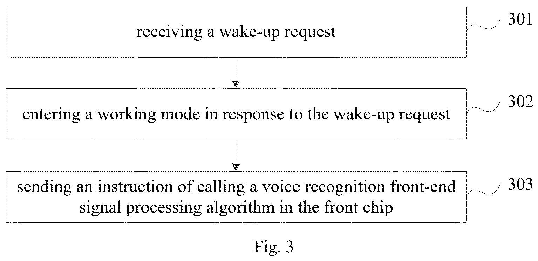

Fig. 3 is a flowchart illustrating a calling method for audio device according to an embodiment of the present disclosure. With reference to Fig. 3, the calling method for audio device includes the following steps 301 to 303.

At step 301, receiving a wake-up request.

In some embodiments, after a smart audio device is powered on, a front chip is in a voice wake-up mode, and a VAD module and a voice wake-up algorithm module may obtain a wake-up message. When receiving the wake-up request, the front chip sends the wake-up request to a main control chip. For example, the front chip may send the wake-up request to the main control chip via a general-purpose I/O interface.

At step 302, entering a working mode in response to the wake-up request.

In some embodiments, the main control chip is in a standby mode after the smart audio device is powered on, and enters the working mode when receiving the wave-up request.

At step 303, sending an instruction of calling a voice recognition front-end signal processing algorithm in the front chip.

As the front chip operating in a multi-thread mode, the instruction of calling the voice recognition front-end signal processing algorithm may be sent to the front chip after the main control chip enters the working mode, so as to switch the front chip from a voice wake-up algorithm mode to a voice recognition front-end signal processing algorithm mode. The voice recognition front-end signal processing algorithm may perform an echo cancellation process on a voice signal, the voice information after the echo cancellation is sent to a voice recognition module of the main control chip, and is recognized by the voice recognition module.

In some embodiments, the main control chip sends the instruction of calling the voice recognition front-end signal processing algorithm to the front chip via an I2C bus interface or an SPI interface.

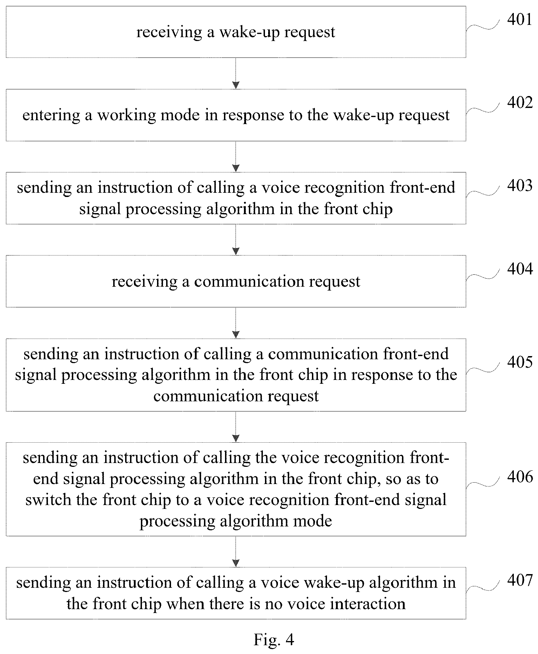

Fig. 4 is a flowchart illustrating a calling method for audio device according to an embodiment of the present disclosure. With reference to Fig. 4, the calling method for audio device includes the following steps 401 to 405.

At step 401, receiving a wake-up request.

At step 402, entering a working mode in response to the wake-up request.

At step 403, sending an instruction of calling a voice recognition front-end signal processing algorithm in the front chip.

It should be noted that the steps 401 to 403 are the same as the steps 301 to 303, and thus will not be repeated here.

At step 404, receiving a communication request.

After receiving the voice information sent from the front chip, the main control chip recognizes the voice information, and may perform voice interaction.

At step 405, sending an instruction of calling a communication front-end signal processing algorithm in the front chip in response to the communication request.

When the main control chip recognizes that a voice command is a communication command, the main control chip may send the instruction of calling the communication front-end signal processing algorithm to the front chip via an I2C bus interface or an SPI interface. After receiving the instruction of calling the communication front-end signal processing algorithm, the front chip switches the algorithm mode thereof to a communication front-end signal processing algorithm.

The front chip performs an echo cancellation process on the voice information with the communication front-end signal processing algorithm, and sends the voice information after the echo cancellation to a communication application module of the main control chip. The communication with other communication modules is performed through the communication application module.

In some embodiments, the calling method for audio device further includes the following steps 406 to 407.

At step 406, sending an instruction of calling the voice recognition front-end signal processing algorithm in the front chip, so as to switch the front chip to a voice recognition front-end signal processing algorithm mode.

After the communication is finished, the main control chip sends the instruction of calling the voice recognition front-end signal processing algorithm to the front chip again via the I2C interface or the SPI interface, so as to switch the front chip back to the voice recognition front-end signal processing algorithm mode to perform voice interaction.

At step 407, when there is no voice interaction, sending an instruction of calling a voice wake-up algorithm in the front chip.

In some embodiments, when there is no voice interaction within a preset period, the main control chip sends the instruction of calling the voice wake-up algorithm to the front chip via the I2C interface or the SPI interface, so as to put the front chip into the voice wake-up mode again. Meanwhile, the main control chip is switched to the standby mode having a low power consumption.

With the calling method for audio device provided by the embodiments of the present disclosure, the main control chip calls the different voice algorithms in the front chip according to the user request; and since the main control chip calls the voice algorithms in the front chip in the multi-thread mode, the voice wake-up algorithm can be arranged in the front chip, and even a main control chip having low computation and low cost can meet application requirements, thereby reducing a cost of main control chip, and further reducing a total cost of a smart audio device; moreover, the main control chip can adjust an operation frequency thereof as required, so that the power consumption of the main control chip can be reduced and the service life of the main control chip can be prolonged. In addition, by calling the voice algorithm modules in the front chip in the multi-thread mode, a flexibility of the smart audio device is enhanced, and different user's needs are met, thereby improving user experience.

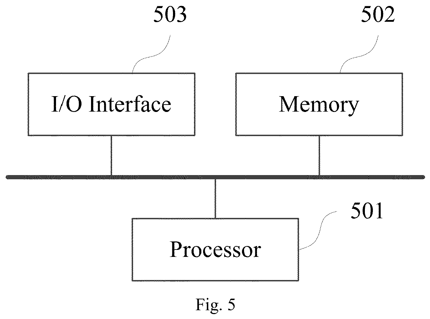

In a third aspect, with reference to Fig. 5, an embodiment of the present disclosure provides an electronic device, including: one or more processors 501; a memory 502 having one or more programs stored thereon, when the one or more programs are executed by the one or more processors, the one or more processors perform the above calling method for audio device; and one or more I/O interfaces 503 connected between the processor and the memory and configured to enable information interaction between the processor and the memory.

The processor 501 is a device having a data processing capability, and includes, but is not limited to, a central processing unit (CPU), etc. The memory 502 is a device having a data storage capability, and includes, but is not limited to, a random access memory (RAM, more specifically, such as a synchronous dynamic RAM (SDRAM), a double data rate SDRAM (DDR SDRAM), etc.), a read-only memory (ROM), an electrically erasable programmable read-only memory (EEPROM), and a flash memory (FLASH). The I/O interface (read/write interface) 503 is connected between the processor 501 and the memory 502, enables the information interaction between the processor 501 and the memory 502, and includes, but is not limited to, a data bus.

In some embodiments, the processor 501, the memory 502, and the I/O interface 503 are connected to each other through a bus 504, so as to be further connected to the other components of the electronic device.

In a fourth aspect, an embodiment of the present disclosure provides a computer readable medium having a computer program stored thereon. When the computer program is executed by a processor, the above calling method for audio device is performed.

It should be understood by those skilled in the art that the functional modules/units in all or some of the steps, systems, and devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or step may be performed through cooperation of several physical components. Some or all of the physical components may be implemented as software executed by a processor, such as a central processing unit, a digital signal processor, or a microprocessor, or may be implemented as hardware, or may be implemented as an integrated circuit, such as an application specific integrated circuit. Such software may be distributed on computer-readable media, which may include computer storage media (or non-transitory media) and communication media (or transitory media). As well known by those skilled in the art, the term "computer storage media" includes volatile/nonvolatile and removable/non-removable media used in any method or technology for storing information (such as computer-readable instructions, data structures, program modules and other data). The computer storage media include, but are not limited to, RAM, ROM, EEPROM, flash memory or other memory techniques, CD-ROM, digital versatile disk (DVD) or other optical discs, magnetic cassette, magnetic tape, magnetic disk or other magnetic storage devices, or any other media which can be used to store the desired information and can be accessed by a computer. In addition, it is well known by those skilled in the art that the communication media generally include computer-readable instructions, data structures, program modules or other data in a modulated data signal, such as a carrier wave or other transmission mechanism, and may include any information delivery media.

It should be understood that both the exemplary embodiments and the specific terms disclosed in the present disclosure are for the purpose of illustration, rather than for limiting the present disclosure. It is obvious to those skilled in the art that the features, characteristics and/or elements described in connection with a particular embodiment may be used alone or in combination with the features, characteristics and/or elements described in connection with other embodiments in some examples, unless expressly indicated otherwise. Therefore, it should be understood by those skilled in the art that various changes in form and detail may be made without departing from the scope of the present disclosure as set forth in the appended claims.

## Claims

1. A smart audio device, comprising:
a front chip (10) provided therein with a plurality of voice algorithm modules; and
a main control chip (20) signally connected with the front chip (10) and configured to call the voice algorithm modules in the front chip (10) according to a user request in a multi-thread mode.

2. The smart audio device of claim 1, wherein the voice algorithm modules comprise:
a voice wake-up algorithm module (11) configured to wake up the main control chip (20) according to the user request;
a voice recognition front-end signal processing module (12) configured to perform a noise reduction process on a front-end voice signal and obtain a voice recognition engine signal; and
a communication front-end signal processing module (13) configured to perform the noise reduction process on a front-end communication signal and obtain a communication application signal.

3. The smart audio device of claim 1, wherein the main control chip (20) comprises:
a voice recognition module (21) configured to recognize a voice signal; and
a communication application module (22) configured to communicate with other communication modules.

4. The smart audio device of claim 1, further comprising:
a communication interface (30) configured to transmit signals between the front chip (10) and the main control chip (20).

5. The smart audio device of claim 4, wherein the communication interface (30) comprises at least one of a general-purpose I/O interface, an Inter-Integrated Circuit bus interface, and a Serial Peripheral Interface.

6. The smart audio device of claim 1, further comprising:
a microphone (40) signally connected with the front chip (10) and configured to receive voice information and transmit the voice information to the front chip (10).

7. The smart audio device of any one of claims 1 to 6, wherein the front chip (10) further comprises:
an echo cancellation module (50) signally connected with the voice algorithm modules and configured to perform an echo cancellation process on the received voice information.

8. A calling method for audio device, comprising:
calling different voice algorithms in a front chip according to a user request in a multi-thread mode.

9. The calling method of claim 8, wherein the step of calling the different voice algorithms in the front chip according to the user request in the multi-thread mode comprises:
receiving (301, 401) a wake-up request, which is the user request;
entering (302, 402) a working mode in response to the wake-up request; and
sending (303, 403) an instruction of calling a voice recognition front-end signal processing algorithm in the front chip, so as to switch the front chip to a voice recognition front-end signal processing algorithm mode.

10. The calling method of claim 9, after the step of sending the instruction of calling the voice recognition front-end signal processing algorithm, the calling method further comprising:
receiving (404) a communication request, which is the user request; and
sending (405) an instruction of calling a communication front-end signal processing algorithm in the front chip in response to the communication request.

11. The calling method of claim 10, after the communication is finished, the calling method further comprising:
sending (406) an instruction of calling the voice recognition front-end signal processing algorithm in the front chip, so as to switch the front chip to the voice recognition front-end signal processing algorithm mode.

12. The calling method of claim 11, in response to no voice interaction, sending (407) an instruction of calling a voice wake-up algorithm in the front chip, so as to switch the front chip to a voice wake-up algorithm mode.

13. An electronic device, comprising:
one or more processors (501);
a memory (502) having one or more programs stored thereon, wherein when the one or more programs are executed by the one or more processors (501), the one or more processors (501) perform the calling method of any one of claims 8 to 12; and
one or more I/O interfaces (503) connected between the processor (501) and the memory (502) and configured to enable information interaction between the processor (501) and the memory (502).

14. A computer readable medium, having a computer program stored thereon, wherein when the computer program is executed by a processor, the calling method of any one of claims 8 to 12 is performed.
